(19) Europäisches Patentamt / European Patent Office / Office européen des brevets

(11) EP 3 296 846 A1

(12) # EUROPEAN PATENT APPLICATION
published in accordance with Art. 153(4) EPC

(43) Date of publication:
**21.03.2018 Bulletin 2018/12**

(21) Application number: **16796422.0**

(22) Date of filing: **13.05.2016**

(51) Int Cl.:
***G06F 3/041*** (2006.01) ***B32B 27/30*** (2006.01)
***C09J 4/02*** (2006.01) ***C09J 11/06*** (2006.01)
***C09J 129/14*** (2006.01)

(86) International application number:
**PCT/JP2016/064304**

(87) International publication number:
**WO 2016/186029 (24.11.2016 Gazette 2016/47)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **15.05.2015 JP 2015100497**
**20.10.2015 JP 2015206447**
**28.01.2016 JP 2016014540**
**16.02.2016 JP 2016027092**

(71) Applicant: **Sekisui Chemical Co., Ltd.**
**Osaka-shi, Osaka 530-0047 (JP)**

(72) Inventors:
- **KAWADA, Shinji**
  **Mishima-gun**
  **Osaka 618-0021 (JP)**
- **FUKATANI, Juichi**
  **Mishima-gun**
  **Osaka 618-0021 (JP)**
- **TODA, Tomoki**
  **Mishima-gun**
  **Osaka 618-0021 (JP)**
- **NAGAI, Yasuharu**
  **Mishima-gun**
  **Osaka 618-0021 (JP)**

(74) Representative: **Cabinet Beau de Loménie**
**158, rue de l'Université**
**75340 Paris Cedex 07 (FR)**

(54) **INTERLAYER FILLING MATERIAL FOR TOUCH PANELS, AND TOUCH PANEL LAMINATE**

(57) The present invention aims to provide an interlayer filling material for a touch panel which is used for filling an interlayer space between a touch panel and another component or an interlayer space between transparent conductive films included in the touch panel in production of a personal digital assistant, which is excellent in followability to steps, which can provide a touch panel laminate that is less likely to suffer cracks or breakage. The present invention also aims to provide a touch panel laminate produced using the interlayer filling material for a touch panel. The present invention relates to an interlayer filling material for a touch panel used for filling an interlayer space between a touch panel and another component, or at least one of interlayer spaces included in the touch panel between transparent conductive films, between a glass sheet and one of the transparent conductive films, between a glass sheet and another glass sheet, between a glass sheet and a polarizing film, between a substrate and a glass sheet, between a substrate and one of the transparent conductive films, and between a substrate and a polarizing film, the interlayer filling material including: a polyvinyl acetal; a reactive diluent; and a photopolymerization initiator.

EP 3 296 846 A1

FIG.1

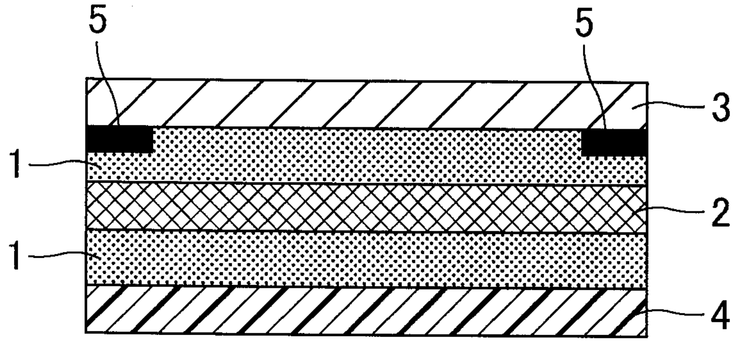

## Description

### TECHNICAL FIELD

The present invention relates to an interlayer filling material for a touch panel used for filling an interlayer space between a touch panel and another component or an interlayer space between transparent conductive films included in the touch panel in production of a personal digital assistant, and a touch panel laminate produced using the interlayer filling material for a touch panel.

### BACKGROUND ART

Touch panels are used in various fields. In a personal digital assistant such as smartphones or tablet PCs, a touch panel is provided below a surface protection panel made of glass or the like. Below the touch panel, a polarizing film and a display are provided in the stated order.

In such a personal digital assistant, for the purpose of improving the transparency, luminance, and contrast on the display screen to enhance the visibility, an interlayer space between a surface protection panel and a touch panel and an interlayer space between the touch panel and a polarizing film are filled with a filling material that has a smaller difference in refractive index with these components than air does.

As the interlayer filling material for a touch panel, acrylic adhesives are often used from the standpoint of transparency, adhesiveness, and coating properties (see Patent Literature 1, for example).

Acrylic adhesives, however, have poor toughness and flexural stiffness as well as low adhesiveness to glass or the like. Accordingly, a touch panel laminate produced using an acrylic adhesive as an interlayer filling material tends to have cracks or breakage in a surface protection panel or a glass substrate. Moreover, since acrylic adhesives have a high loss modulus to be easily deformed on impact, cohesive failures tend to occur. Along with the recent trend of downsizing, thinning, or weight reduction of a personal digital assistant, thinning of a surface protection panel, a glass substrate, or a filling material has been promoted. Such a thin touch panel laminate, however, tends to bend, increasing the possibility of occurrence of cracks or breakage.

The use of an acrylic adhesive for an interlayer filling material further lowers the flexural modulus to cause easy bending, further increasing the possibility of occurrence of cracks or breakage in the touch panel laminate. To overcome the situation, the use of an acrylic adhesive that exhibits a high modulus of elasticity due to its high crosslinking degree has been considered. However, an acrylic adhesive with an increased modulus of elasticity has poor adhesiveness to glass or suffers great cure shrinkage, causing liquid crystal unevenness. Moreover, since an acrylic adhesive may become yellowish due to an acrylic component, a liquid crystal display device including the acrylic adhesive displays slightly yellowish images, failing to display high-definition images.

### CITATION LIST

- Patent Literature

Patent Literature 1: JP 2011-74308 A

### SUMMARY OF INVENTION

- Technical Problem

The present inventors have studied an interlayer filling material for a touch panel used for filling an interlayer space between a touch panel and another component or an interlayer space between transparent conductive films included in the touch panel, and considered the use of a polyvinyl acetal as an alternative to conventionally widely used acrylic adhesives. Polyvinyl acetal has high toughness and flexural stiffness and also has excellent properties of high adhesiveness to glass or the like. Accordingly, in the case of using a polyvinyl acetal as an interlayer filling material, occurrence of cracks or breakage in the surface protection panel or glass substrate can be prevented. Moreover, even when the personal digital assistant is broken on impact of a fall, prevention of scattering of glass fragments or the like can be expected.

However, polyvinyl acetal is solid at normal temperature at around 23°C, and therefore has poor followability to steps at decorative printing portions, wiring, and the like upon filling of an interlayer space (lamination of layers). To overcome the situation, the use of a solution of a polyvinyl acetal dissolved in an organic solvent has been considered. However, an additional process of removing the organic solvent is required, and the organic solvent may problematically remain even after the removal process.

The present invention aims to, in consideration of the state of the art, provide an interlayer filling material for a touch panel which is used for filling an interlayer space between a touch panel and another component or an interlayer space between transparent conductive films included in the touch panel in production of a personal digital assistant, and which is excellent in followability to steps, and which can provide a touch panel laminate that is less likely to suffer cracks or breakage. The present invention also aims to provide a touch panel laminate produced using the interlayer filling material for a touch panel.

- Solution to problem

The present invention relates to an interlayer filling material for a touch panel used for filling an interlayer space between a touch panel and another component, or at least one of interlayer spaces included in the touch panel between transparent conductive films, between a glass sheet and one of the transparent conductive films, between a glass sheet and another glass sheet, between a glass sheet and a polarizing film, between a substrate and a glass sheet, between a substrate and one of the transparent conductive films, and between a substrate and a polarizing film, the interlayer filling material including: a polyvinyl acetal; a reactive diluent; and a photopolymerization initiator.

The present invention is specifically described in the following.

The present inventors made intensive studies to find out that a polyvinyl acetal blended with a reactive diluent and a photopolymerization initiator is liquid (sol) at normal temperature at around 23°C to exhibit excellent followability to steps and can provide a touch panel laminate that is less likely to suffer cracks or breakage. Moreover, irradiation with light after lamination allows the reactive diluent to be reacted, thereby preventing remaining or bleeding of the reactive diluent.

The interlayer filling material for a touch panel of the present invention is used for filling an interlayer space between a touch panel and another component or an interlayer space between transparent conductive films included in the touch panel. Another component mentioned above is not particularly limited, and is preferably a surface protection panel (e.g., a glass sheet, a polycarbonate sheet, an acrylic sheet) or a polarizing film. In other words, the interlayer filling material for a touch panel of the present invention is preferably used for filling at least one of an interlayer space between a surface protection panel and a touch panel, an interlayer space between the touch panel and a polarizing film, an interlayer space between the touch panel and another component, and interlayer spaces included in the touch panel between transparent conductive films, between a glass sheet and one of the transparent conductive films, between a glass sheet and another glass sheet, between a glass sheet and a polarizing film, between a substrate and a glass sheet, between a substrate and one of the transparent conductive films, and between a substrate and a polarizing film.

The interlayer filling material for a touch panel of the present invention contains a polyvinyl acetal. Containing a polyvinyl acetal as a main component, the interlayer filling material for a touch panel of the present invention can provide a touch panel laminate that is less likely to suffer cracks or breakage.

The polyvinyl acetal can be prepared by saponifying polyvinyl acetate to prepare polyvinyl alcohol and then acetalizing the polyvinyl alcohol with an aldehyde in the presence of a catalyst. The degree of saponification of the polyvinyl alcohol is not particularly limited, and is commonly within a range of 70 to 99.9 mol%. The degree of saponification of the polyvinyl alcohol is preferably 70 to 99.8 mol%, more preferably 80 to 99.8 mol%.

The average degree of polymerization of the polyvinyl alcohol is not particularly limited. From the standpoint of achieving better toughness or flexural stiffness, a polyvinyl acetal with a large molecular weight is preferred, and therefore, the polyvinyl alcohol used preferably has a high average degree of polymerization. The lower limit of the average degree of polymerization of the polyvinyl alcohol is preferably 100, and the upper limit thereof is preferably 4,000. When the average degree of polymerization is less than 100, the polyvinyl acetal may have lower toughness or flexural stiffness, failing to exert a sufficient effect of preventing cracks or breakage. When the average degree of polymerization is more than 4,000, the viscosity of the solution during acetalization of the polyvinyl alcohol becomes excessively high to make the acetalization difficult. Moreover, the coating properties of the interlayer filling material for a touch panel may be lowered. The lower limit of the average degree of polymerization is more preferably 150, and the upper limit thereof is more preferably 3,500. The lower limit is still more preferably 200, and the upper limit is still more preferably 3,000.

For acetalization of the polyvinyl alcohol with an aldehyde in the presence of a catalyst, a solution containing the polyvinyl alcohol may be used. An exemplary solvent used for the solution containing the polyvinyl alcohol is water.

The aldehyde is not particularly limited. Commonly, a C1-C10 aldehyde is favorably used.

The C1-C10 aldehyde is not particularly limited, and may be either a linear aldehyde or a branched aldehyde. Examples thereof include n-butyraldehyde, isobutyraldehyde, n-valeraldehyde, 2-ethylbutyraldehyde, n-hexylaldehyde, n-octylaldehyde, n-nonylaldehyde, n-decylaldehyde, formaldehyde, acetaldehyde, and benzaldehyde. Among these, preferred are n-butyraldehyde, n-hexylaldehyde, and n-valeraldehyde, and more preferred is n-butyraldehyde. These aldehydes may be used alone, or in combination of two or more thereof.

In other words, the polyvinyl acetal preferably contains polyvinyl butyral (when the aldehyde is n-butyraldehyde,

the polyvinyl acetal is referred to as polyvinyl butyral). The use of the polyvinyl butyral allows the interlayer filling material for a touch panel to exhibit appropriate adhesiveness to glass, leading to better light resistance or weather resistance. Two or more types of polyvinyl acetals may be optionally used.

The lower limit of the amount of hydroxy groups (hydroxy group content) of the polyvinyl acetal is preferably 16 mol%, and the upper limit thereof is preferably 45 mol%. When the hydroxy group content is 16 mol% or more, the adhesiveness of the interlayer filling material for a touch panel to glass is improved. When the hydroxy group content is 45 mol% or less, the moisture resistance and weather resistance is improved. The lower limit of the hydroxy group content is more preferably 18 mol%, still more preferably 20 mol%, particularly preferably 22 mol%. The upper limit thereof is more preferably 40 mol%, still more preferably 38 mol%, further preferably 36 mol%, particularly preferably 35 mol%.

The hydroxy group content of the polyvinyl acetal is a value in percentage of the mole fraction (mol%) obtained by dividing the amount of ethylene groups to which hydroxy groups are bonded by the total amount of ethylene groups of the main chain. The amount of ethylene groups to which hydroxy groups are bonded can be determined, for example, by the method in conformity with JIS K6728 "Testing methods for polyvinyl butyral".

The lower limit of the degree of acetylation (acetyl group content) of the polyvinyl acetal is preferably 0.1 mol%, and the upper limit thereof is preferably 30 mol%. When the acetyl group content is 0.1 mol% or more, the compatibility with the reactive diluent is enhanced. When the acetyl group content is 30 mol% or less, the moisture resistance of the polyvinyl acetal is improved. When the acetyl group content is more than 30 mol%, the reaction efficiency during the production of the polyvinyl acetal may be lowered. The lower limit of the acetyl group content is more preferably 0.2 mol%, still more preferably 0.3 mol%. The upper limit thereof is more preferably 24 mol%, still more preferably 20 mol%, further preferably 19.5 mol%, particularly preferably 15 mol%.

The acetyl group content of the polyvinyl acetal is a value in percentage of the mole fraction (mol%) obtained by subtracting the amount of ethylene groups to which acetal groups are bonded and the amount of ethylene groups to which hydroxy groups are bonded from the total amount of ethylene groups of the main chain and then dividing the obtained value by the total amount of ethylene groups of the main chain. The amount of ethylene groups to which acetal groups are bonded can be determined, for example, in conformity with JIS K6728 "Testing methods for polyvinyl butyral".

The acetyl group content of the polyvinyl acetal is controlled within the above range, for example, by adjusting the degree of saponification of the polyvinyl alcohol. In other words, the acetyl group content of the polyvinyl acetal depends on the degree of saponification of the polyvinyl alcohol. In the case where the polyvinyl alcohol used has a lower degree of saponification, the acetyl group content of the polyvinyl acetal becomes larger. By contrast, in the case where the polyvinyl alcohol used has a higher degree of saponification, the acetyl group content of the polyvinyl acetal becomes smaller.

The lower limit of the degree of acetalization of the polyvinyl acetal is preferably 50 mol%, and the upper limit thereof is preferably 85 mol%. When the degree of acetalization is 50 mol% or higher, the compatibility with the reactive diluent is enhanced. When the degree of acetalization is 85 mol% or lower, the reaction time needed for the production of the polyvinyl acetal can be shortened. The lower limit of the degree of acetalization is more preferably 54 mol%, still more preferably 58 mol%, particularly preferably 60 mol%. The upper limit of the degree of acetalization is more preferably 82 mol%, still more preferably 79 mol%, particularly preferably 77 mol%.

The degree of acetalization of the polyvinyl acetal is a value in percentage of the mole fraction (mol%) obtained by dividing the amount of ethylene groups to which acetal groups are bonded by the total amount of ethylene groups of the main chain. The degree of acetalization can be determined by measuring the acetyl group content and the vinyl alcohol content (amount of hydroxy groups) by the method in conformity with JIS K6728 "Testing methods for polyvinyl butyral", calculating the mole fraction based on the measurement results, and subtracting the acetyl group content and the vinyl alcohol content from 100 mol%.

The degree of acetalization of the polyvinyl acetal can be controlled, for example, by adjusting the amount of the aldehyde. When the amount of the aldehyde is smaller, the degree of acetalization of the polyvinyl acetal is lowered. When the amount of the aldehyde is larger, the degree of acetalization of the polyvinyl acetal is increased.

The interlayer filling material for a touch panel of the present invention contains a reactive diluent.

The reactive diluent as used herein refers to an agent that is compatible with the polyvinyl acetal to liquefy (solate) the interlayer filling material for a touch panel and can react between themselves by irradiation with light to crosslink and cure.

Examples of the reactive diluent include reactive diluents having a reactive double bond, such as (meth)acrylic monomers and (meth)acrylic oligomers, and epoxy reactive diluents such as glycidyl ether. In particular, preferred is a reactive diluent having a reactive double bond because it is highly compatible with the polyvinyl acetal and easily crosslinks and cures when combined with a photopolymerization initiator. The combination use of the polyvinyl acetal with a reactive diluent having a reactive double bond enables the interlayer filling material for a touch panel to exhibit excellent followability to steps in the liquid (sol) form at normal temperature (25°C) and to provide a touch panel laminate that is less likely to suffer cracks or breakage.

The (meth)acrylic monomer used as the reactive diluent having a reactive double bond may be a monofunctional, bifunctional, or tri- or higher functional (meth)acrylic monomer.

Examples of the monofunctional (meth)acrylic monomer include methyl (meth)acrylate, ethyl (meth)acrylate, propyl (meth)acrylate, butyl (meth)acrylate, 2-hydroxyethyl (meth)acrylate, diethylene glycol monoethyl ether (meth)acrylate, isobornyl (meth)acrylate, 3-methoxybutyl (meth)acrylate, 2-acryloyloxyethyl-2-hydroxypropyl phthalate, and 2-methacryloyloxyethyl-2-hydroxylpropyl phthalate.

Examples of the bifunctional (meth)acrylic monomer include ethylene glycol di(meth)acrylate, diethylene glycol di(meth)acrylate, tetraethylene glycol di(meth)acrylate, 1,6-hexanediol dimethacrylate, 1,9-nonanediol diacrylate, polytetramethylene glycol di(meth)acrylate, neopentyl glycol di(meth)acrylate, 1,3-butylene glycol di(meth)acrylate, and 2,2-bis[4-(methacryloxyethoxy)phenyl]propane di(meth)acrylate.

Examples of the tri- or higher functional (meth)acrylic monomer include trimethylolpropane triacrylate, pentaerythritol triacrylate, pentaerythritol trimethacrylate, pentaerythritol tetramethacrylate, dipentaerythritol pentaacrylate, dipentaerythritol hexaacrylate, tri(2-acryloyloxy ethyl)phosphate, tetramethyrolmethane tri(meth)acrylate, tetramethylol propane tetra(meth)acrylate, triallyl isocyanurate, and derivatives thereof.

The above (meth)acrylic monomers may be used alone, or in combination of two or more thereof. In particular, preferred are (meth)acrylic monomers as they are particularly excellent in compatibility with the polyvinyl acetal. More specifically, preferred are methyl (meth)acrylate, ethyl (meth)acrylate, propyl (meth)acrylate, butyl (meth)acrylate, and 2-hydroxyethyl acrylate.

The (meth)acrylic oligomer used as the reactive diluent having a reactive double bond may be an oligomer including a plurality of the (meth)acrylic monomers bonded to each other. In particular, preferred is a (meth)acrylic oligomer prepared from the acrylic monomer because such an oligomer is particularly excellent in compatibility with the polyvinyl acetal.

The reactive diluent having a reactive double bond preferably contains (meth)acrylate having a glycol skeleton. Containing the (meth)acrylate having a glycol skeleton, the initial haze value and the haze value after the high-temperature and high-humidity test can be suppressed, so that excellent transparency required for the interlayer filling material for a touch panel can be exhibited. The (meth)acrylate having a glycol skeleton is excellent in compatibility with the polyvinyl acetal and also excellent in photoreactivity. Moreover, the use of the (meth)acrylate having a glycol skeleton allows a reduction in the amount of double bonds in the interlayer filling material for a touch panel, suppressing cure shrinkage.

Specific examples of the (meth)acrylate having a glycol skeleton include: monofunctional (meth)acrylates such as methoxy polyethylene glycol (meth)acrylate having 2 to 23 ethylene groups, phenoxy diethylene glycol (meth)acrylate, phenoxy hexaethylene glycol (meth)acrylate, phenoxy polyethylene glycol (meth)acrylate having 2 to 14 ethylene groups, and methoxypolyethylene glycol (meth)acrylate having 2 to 14 propylene groups; bifunctional (meth)acrylates such as polypropylene glycol diacrylate, diethylene glycol di(meth)acrylate having 2 to 23 ethylene groups, ethoxylated bisphenol A diacrylate having 2 to 14 ethylene groups, and polypropylene glycol diacrylate having 2 to 14 propylene groups; and tri- or higher functional (meth)acrylates such as EO-modified trimethyrolpropane tri(meth)acrylate, PO-modified trimethyrolpropane tri(meth)acrylate, EO/PO-modified trimethyrolpropane tri(meth)acrylate, dipentaerythritol penta(meth)acrylate, dipentaerythritol hexa(meth)acrylate, and pentaerythritol tetra(meth)acrylate. The term "EO" represents ethylene oxide, and an EO-modified compound means a compound having a block structure including ethylene oxide groups. The term "PO" represents propylene oxide, and a PO-modified compound means a compound having a block structure including propylene oxide groups. These (meth)acrylates having a glycol skeleton may be used alone, or in combination of two or more thereof.

Examples of the commercial products of the (meth)acrylate having a glycol skeleton include NK Ester series (AM-90G, AM-130G, M-90G, A-200, A-600, APG-400, APG-700, A-GLY-9E, A-TMPT-3EO, A-TMPT-9EO, A-TMPT-3PO, A-TMPT-6PO, and ATM-35E) available from Shin-Nakamura Chemical Co., Ltd.

The reactive diluent having a reactive double bond preferably contains phosphate ester (meth)acrylate. Containing the phosphate ester (meth)acrylate, the interlayer filling material for a touch panel can have a higher tan$\delta$ value while maintaining a high storage modulus, providing a touch panel laminate especially excellent in impact resistance. Moreover, the touch panel laminate to be obtained is less likely to suffer discoloration to exhibit especially high transparency. This is presumably because the phosphate ester (meth)acrylate, among the reactive diluents having a reactive double bond, is excellent in compatibility with the polyvinyl acetal. Excellent compatibility between the phosphate ester (meth)acrylate and the polyvinyl acetal allows the interlayer filling material for a touch panel to avoid the increase of the viscosity, leading to excellent photoreactivity.

Any phosphate ester (meth)acrylate may be used. Preferred is a phosphate ester (meth)acrylate represented by the following formula (1). These phosphate ester (meth)acrylates may be used alone, or in combination of two or more thereof.

$$A^1-O-X^1-O-\overset{\overset{\displaystyle O}{\|}}{\underset{\underset{\displaystyle O-Z^2}{|}}{P}}-O-Z^1 \qquad (1)$$

In the formula (1), $Z^1$ represents $A^2$-O-$X^2$-, a substituent group having no polymerizable double bond, or a hydrogen atom, $Z^2$ represents $A^3$-O-$X^3$-, a substituent group having no polymerizable double bond, or a hydrogen atom, $A^1$, $A^2$, and $A^3$ represent acryloyl groups or methacryloyl groups, $X^1$, $X^2$, and $X^3$ represent alkylene groups, alkyleneoxy groups, alkyleneoxycarbonyl groups, alkylene carbonyloxy group, or a combination of these groups.

Examples of the commercial products of the phosphate ester (meth)acrylate include 2-(methacryloyloxy)ethyl phosphate (SR9050 available from Sartomer), tris[2-(methacryloyloxy)ethyl] phosphate (SR9051 available from Sartomer), tris[2-(acryloyloxy)ethyl] phosphate (SR9053 available from Sartomer), KAYAMER series available from Nippon Kayaku Co., Ltd., and Phosmer series available from Uni-Chemical Co., Ltd.

In the case of using the (meth)acrylate having a glycol skeleton or the phosphate ester (meth)acrylate as the reactive diluent having a reactive double bond, another reactive diluent having a reactive double bond other than the (meth)acrylate having a glycol skeleton and the phosphate ester (meth)acrylate may be used in combination.

The amount of the reactive diluent in the interlayer filling material for a touch panel of the present invention is not particularly limited. The lower limit thereof is preferably 20 parts by weight and the upper limit thereof is preferably 400 parts by weight, relative to 100 parts by weight of the polyvinyl acetal. When the amount of the reactive diluent is less than 20 parts by weight, the interlayer filling material for a touch panel may not be sufficiently liquefied (solated), failing to exhibit high followability to steps. When the amount of the reactive diluent is more than 400 parts by weight, the interlayer filling material for a touch panel may have lower toughness, flexural stiffness, or adhesiveness to glass, failing to provide a touch panel laminate that is less likely to suffer cracks or breakage. The lower limit of the amount of the reactive diluent is more preferably 40 parts by weight, and the upper limit is more preferably 350 parts by weight. The lower limit is still more preferably 60 parts by weight and the upper limit is still more preferably 300 parts by weight. The lower limit is particularly preferably 80 parts by weight and the upper limit is particularly preferably 250 parts by weight.

In the case where the interlayer filling material for a touch panel contains the (meth)acrylate having a glycol skeleton as the reactive diluent having a reactive double bond, the lower limit of the amount of the (meth)acrylate having a glycol skeleton in the interlayer filling material for a touch panel is preferably 8% by weight, and the upper limit thereof is preferably 38% by weight. With the amount of the (meth)acrylate having a glycol skeleton within this range, the initial haze value of the cured substance can be set to 1% or lower and the haze value thereof after the treatment at a temperature of 85°C and a humidity of 85% for 240 hours can be set to 1.5% or lower. In other words, the interlayer filling material for a touch panel can sufficiently exhibit high transparency that is desired for the interlayer filling material for a touch panel. When the amount of the (meth)acrylate having a glycol skeleton is less than 8% by weight, the haze value after the moisture-heat durability test may be 1% or higher. When the amount is more than 38% by weight, the initial haze value may be 1% or higher. The lower limit of the amount of the (meth)acrylate having a glycol skeleton is more preferably 18% by weight, and the upper limit thereof is more preferably 30% by weight.

In the case where the interlayer filling material for a touch panel contains the phosphate ester (meth)acrylate as the reactive diluent having a reactive double bond, the lower limit of the amount of the phosphate ester (meth)acrylate in the interlayer filling material for a touch panel is preferably 2% by weight, and the upper limit thereof is preferably 10% by weight. When the amount of the phosphate ester (meth)acrylate is within the above range, the touch panel laminate to be obtained has especially high transparency and excellent impact resistance. Moreover, the yellow index (YI) value of the cured substance can be controlled to 1 or lower. In other words, the interlayer filling material for a touch panel can sufficiently exhibit high transparency without discoloration that is desired for the interlayer filling material for a touch panel. The lower limit of the amount of the phosphate ester (meth)acrylate is more preferably 5% by weight, and the upper limit thereof is more preferably 8% by weight.

In the interlayer filling material for a touch panel of the present invention, the amount of double bonds in all the compounds excluding the photopolymerization initiator is preferably 2.9 mmol/g or less. With such an amount of double bonds, the cure shrinkage can be controlled to 4% or lower, preventing liquid crystal unevenness due to the cure shrinkage. The upper limit of the amount of double bonds is more preferably 2.4 mmol/g, still more preferably 2.2 mmol/g.

The lower limit of the amount of double bonds is not particularly limited, and is preferably 1.5 mmol/g or more. With such an amount of double bonds, the interlayer filling material for a touch panel can surely prevent occurrence of cracks or breakage, while exhibiting high followability to steps. The lower limit of the amount of double bonds is more preferably 1.7 mmol/g, still more preferably 2.0 mmol/g.

The amount of double bonds herein can be calculated based on the amounts and molecular weights of the compounds having a reactive double bond, relative to all the compounds excluding the photopolymerization initiator,

contained in the interlayer filling material for a touch panel of the present invention. Alternatively, the amount of double bonds can be calculated by determining the iodine number by the method in conformity with JIS K 0070 and then calculating the amount of double bonds based on the obtained iodine number. Alternatively, the amount of double bonds can be determined by analyzing the composition of the interlayer filling material for a touch panel using a gas chromatograph-mass spectrometer (GC-MS) and calculating the amount of double bonds based on the amounts and molecular weights of the compounds having a reactive double bond.

The interlayer filling material for a touch panel of the present invention contains a photopolymerization initiator.

The photopolymerization initiator may be appropriately selected in accordance with the kind of the reactive diluent. For example, in the case where a (meth)acrylic monomer or a (meth)acrylic oligomer is used as the reactive diluent, a persulfate, an organic peroxide, and an azo compound may be used. These photopolymerization initiators may be used alone, or in combination of two or more thereof.

Specific examples of the photopolymerization initiator include: aromatic ketone compounds such as benzophenone, N,N'-tetramethyl-4,4'-diaminobenzophenone (Michler's ketone), N,N-tetraethyl-4,4'-diaminobenzophenone, 4-methoxy-4'-dimethylaminobenzophenone, α-hydroxyisobutylphenon, 2-ethylanthraquinone, t-butyl anthraquinone, 1,4-dimethylanthraquinone, 1-chloroanthraquinone, 2,3-dichloroanthraquinone, 3-chloro-2-methylanthraquinone, 1,2-benzoanthraquinone, 2-phenylanthraquinone, 1,4-naphthoquinone, 9,10-phenanthraquinone, thioxanthone, 2-chlorothioxanthone, 1-hydroxycyclohexyl phenyl ketone, 2,2-dimethoxy-1,2-diphenylethan-1-one, and 2-hydroxy-2-methyl-1-phenyl propane-1-one; benzoin compounds such as benzoin, methyl benzoin, and ethyl benzoin; benzoin ether compounds such as benzoin methyl ether, benzoin ethyl ether, benzoin isobutyl ether, and benzoin phenyl ether; benzil; 2,2-diethoxyacetophenone; benzyl dimethyl ketal; acridine compounds such as ester compounds of β-(acridine-9-yl)acrylic acid, 9-phenylacridine, 9-pyridylacridine, and 1,7-diacridinoheptane; 2,4,5-triarylimidazole dimers such as 2-(o-chlorophenyl)-4,5-diphenylimidazole dimer, 2-(o-chlorophenyl)-4,5-di(m-methoxyphenyl)imidazole dimer, 2-(o-fluorophenyl)-4,5-diphenylimidazole dimer, 2-(o-methoxyphenyl)-4,5-diphenylimidazole dimer, 2-(p-methoxyphenyl)-4,5-diphenylimidazole dimer, 2,4-di(p-methoxyphenyl)5-phenylimidazole dimer, 2-(2,4-dimethoxyphenyl)-4,5-diphenylimidazole dimer, and 2-(p-methylmercaptophenyl)-4,5-diphenylimidazole dimer; and 2-benzyl-2-dimethylamino-1-(4-morpholinophenyl)-1-butanone, 2-methyl-1-[4-(methylthio)phenyl]-2-merpholino-1-propane, bis(2,4,6-trimethylbenzoyl)-phenylphosphine oxide, and oligo(2-hydroxy-2-methyl-1-(4-(1-methylvinyl)phenyl)propanone).

In particular, for obtaining a transparent interlayer filling material for a touch panel without discoloration, preferred are α-hydroxyalkylphenone compounds such as 1-hydroxycyclohexyl phenyl ketone, 2-hydroxy-2-methyl-1-phenyl-propane-1-one, and 1-[4-(2-hydroxyethoxy)-phenyl]-2-hydroxy-2-methyl-1-propane-1-one, acylphosphine oxide compounds such as bis(2,4,6-trimethylbenzoyl)-phenylphosphine oxide, bis(2,6-dimethoxybenzoyl)-2,4,4-trimethyl-pentylphosphine oxide, and 2,4,6-trimethyl benzoyl-diphenylphosphine oxide, oligo(2-hydroxy-2-methyl-1-(4-(1-methylvinyl)phenyl)propanone), and combinations of these.

The amount of the photopolymerization initiator in the interlayer filling material for a touch panel of the present invention is not particularly limited. The lower limit thereof is preferably 0.01 parts by weight, and the upper limit thereof is preferably 5 parts by weight, relative to 100 parts by weight of the reactive diluent. When the amount of the photopolymerization initiator is less than 0.01 parts by weight, reaction of the reactive diluent may not be sufficient or may take a long time. When the amount of the photopolymerization initiator is more than 5 parts by weight, the reactivity is not anymore enhanced. On the contrary, bleeding of the photopolymerization initiator may occur. The lower limit of the amount of the photopolymerization initiator is more preferably 0.1 parts by weight, and the upper limit thereof is more preferably 2 parts by weight.

The interlayer filling material for a touch panel of the present invention may further contain a non-reactive component. When the viscosity is controlled within an appropriate range at 25°C with addition of the non-reactive component, the interlayer filling material for a touch panel can exhibit high coating properties.

The non-reactive component herein means a component which is compatible with the polyvinyl acetal and which has no reactive double bond therein or has a reactive double bond which hardly has polymerization reactivity.

Specific examples of the non-reactive component include plasticizers such as organic acid esters, organophosphate esters, and organophosphite esters, tackifiers such as rosin resins and terpene resins, and solventless acrylic polymers. As the plasticizer, a conventionally known plasticizer used for polyvinyl acetal may be used. Examples of the plasticizer include organic acid ester plasticizers such as monobasic organic acid esters and polybasic organic acid esters, and phosphoric acid plasticizers such as organophosphate plasticizers and organophosphite plasticizers. Preferred among these are organic acid ester plasticizers. These plasticizers may be used alone, or in combination of two or more thereof. The plasticizer is preferably a liquid plasticizer.

Examples of the organic acid ester include monobasic organic acid esters and polybasic organic acid esters.

The monobasic organic acid ester is not particularly limited, and examples thereof include glycol esters obtainable by reaction between a monobasic organic acid (e.g., butyric acid, isobutyric acid, caproic acid, 2-ethylbutyric acid, heptanoic acid, n-octylic acid, 2-ethylhexylic acid, pelargonic acid (n-nonylic acid), decylic acid) and a glycol (e.g., triethylene glycol, tetraethylene glycol, tripropylene glycol).

The polybasic organic acid ester is not particularly limited, and examples thereof include ester compounds obtainable by reaction between a polybasic organic acid (e.g., adipic acid, sebacic acid, azelaic acid) and a C4-C8 linear or branched alcohol.

The organic acid ester is preferably an organic acid diester represented by the following formula (2). The use of the organic acid diester improves the moldability of the interlayer filling material for a touch panel.

$$R^1\text{-CO-(-}R^3\text{-O-)}_p\text{-CO-}R^2 \qquad (2)$$

In the formula (2), $R^1$ and $R^2$ each represent a C5-C10 (preferably C6-C10) organic group, $R^3$ represents an ethylene, isopropylene, or n-propylene group, and p represents an integer of 3 to 10.

Specific examples of the organic acid ester include triethylene glycol-di-2-ethylbutyrate, triethylene glycol-di-2-ethylhexanoate, triethylene glycol dicaprylate, triethylene glycol-di-n-octanoate, triethylene glycol-di-n-heptanoate, tetraethylene glycol-di-n-heptanoate, tetraethylene glycol-di-2-ethylhexanoate, dibutyl sebacate, dioctyl azelate, dibutyl carbitol adipate, ethylene glycol-di-2-ethyl butyrate, 1,3-propylene glycol-di-2-ethyl butyrate, 1,4-butylene glycol-di-2-ethylbutyrate, diethylene glycol-di-2-ethylbutyrate, diethylene glycol-di-2-ethylhexanoate, dipropylene glycol-di-2-ethylbutyrate, triethylene glycol-di-2-ethylpentanoate, tetraethylene glycol-di-2-ethylbutyrate, diethylene glycol dicaprylate, dihexyl adipate, dioctyl adipate, hexylcyclohexyl adipate, diisononyl adipate, heptylnonyl adipate, oil-modified alkyd sebacate, mixtures of phosphate esters and adipic acid esters, and mixed type adipic acid esters prepared from a C4-C9 alkyl alcohol and a C4-C9 cyclic alcohol. In particular, preferred is at least one selected from the group consisting of dihexyl adipate (DHA), triethylene glycol-di-2-ethylhexanoate (3GO), tetraethylene glycol-di-2-ethylhexanoate (4GO), triethylene glycol-di-2-ethylbutyrate (3GH), tetraethylene glycol-di-2-ethylbutyrate (4GH), tetraethylene glycol-di-n-heptanoate (4G7), and triethylene glycol-di-n-heptanoate (3G7). More preferred are triethylene glycol-di-2-ethylbutyrate, triethylene glycol-di-n-heptanoate (3G7), and triethylene glycol-di-2-ethylhexanoate (3GO), and still more preferred is triethylene glycol-di-2-ethylhexanoate.

The organophosphate ester or organophosphite ester may be a compound obtainable by condensation reaction between phosphoric acid or phosphorous acid and an alcohol. In particular, preferred is a compound obtainable by condensation reaction between a C1-C12 alcohol (e.g., methanol, ethanol, butanol, hexanol, 2-ethyl butanol, heptanol, octanol, 2-ethylhexanol, decanol, dodecanol, butoxy ethanol, butoxyethoxy ethanol, benzyl alcohol) and phosphoric acid or phosphorous acid. Specific examples thereof include trimethyl phosphate, triethyl phosphate, tripropyl phosphate, tributyl phosphate, tri(2-ethylhexyl) phosphate, tri(butoxyethyl) phosphate, tri(2-ethylhexyl) phosphite, isodecylphenyl phosphate, and triisopropyl phosphate.

The rosin resin may be, for example, a rosin diol.

The rosin diol is not particularly limited as long as it is a rosin-modified diol having two rosin skeletons and two hydroxy groups in the molecule. Diols having a rosin component in the molecule are generically referred to as rosin polyols. The rosin polyols are classified into the polyether type in which the skeleton excluding that of the rosin component is like polypropylene glycol (PPG) and the polyester type such as condensed polyester polyols, lactone-type polyester polyols, and polycarbonate diols.

Examples of the rosin diol include rosin esters obtainable by reaction between a rosin and a polyhydric alcohol, epoxy-modified rosin esters obtainable by reaction between a rosin and an epoxy compound, and modified rosins having a hydroxy group such as polyethers having a rosin skeleton. These can be produced by a conventionally known method.

Examples of the rosin component include abietic acid and its derivatives (e.g., dehydroabietic acid, dihydroabietic acid, tetrahydroabietic acid, diabietic acid, neoabietic acid), pimaric acid-type resin acids such as levopimaric acid, hydrogenated rosins obtainable by hydrogenation of these, and disproportionated rosins obtainable by disproportionation of these.

Examples of the commercial product of the rosin resin include Pine crystal series (D-6011, KE-615-3, KR-614, KE-100, KE-311, KE-359, KE-604, D-6250) available from Arakawa Chemical Industries, Ltd.

Examples of the terpene resin include terpene phenolic resins.

The terpene phenolic resin is a copolymer of a phenol and a terpene resin that is an essential oil constituent obtainable from natural products such as turpentine or orange peels, and includes a partially hydrogenated terpene phenolic resin obtained by partially hydrogenating the copolymer and a fully hydrogenated terpene phenolic resin obtained by fully hydrogenating the copolymer.

Here, the fully hydrogenated terpene phenolic resin refers to a terpene resin (tackifier resin) obtainable by substantially fully hydrogenating a terpene phenolic resin. The partially hydrogenated terpene phenolic resin refers to a terpene resin (tackifier resin) obtainable by partially hydrogenating a terpene phenolic resin. The terpene phenolic resin has a terpene-derived double bond and a phenol-derived aromatic ring double bond. Accordingly, the fully hydrogenated terpene phenolic resin means a tackifier resin in which both the terpene site and phenol site are fully or almost hydrogenated. The partially hydrogenated terpene phenolic resin means a terpene phenolic resin in which the hydrogenation of these sites is not fully but partially performed. Any hydrogenation method and any reaction format may be employed.

Examples of the commercial products of the terpene phenolic resin include YS POLYSTER NH (fully hydrogenated terpene phenolic resin) available from Yasuhara Chemical Co., Ltd.

Examples of the solventless acrylic polymer include polymers of at least one monomer selected from alkyl (meth)acrylate esters having a C1-C20 alkyl group, and a copolymer of the monomer and another monomer copolymerizable therewith.

Examples of the commercial products of the solventless acrylic polymer include ARUFON-UP1000 series, UH2000 series, and UC3000 series available from Toagosei Co., Ltd.

The non-reactive components may be used alone, or in combination of two or more thereof. In order to lower the viscosity of the interlayer filling material for a touch panel, a liquid non-reactive component having a viscosity at 25°C of 5000 mPa·s or lower is preferably contained. In order to increase the viscoelasticity of the cured substance of the interlayer filling material for a touch panel to improve anti-crack properties, a rosin resin or a terpene resin that is solid at 25°C is preferably contained within a range that the viscosity is not too much increased.

When the interlayer filling material for a touch panel of the present invention contains the non-reactive component, the amount of the non-reactive component is not particularly limited. The amount of the non-reactive component may be adjusted to allow high coating properties to be exhibited, within a range that the effect of the invention, which is to obtain a touch panel laminate excellent in followability to steps, less likely to suffer cracks or breakage, having little or no liquid crystal unevenness, and having high transparency, is not impaired.

Specifically, in the case where the non-reactive component is a plasticizer, the lower limit of the amount of the plasticizer is preferably 5 parts by weight, and the upper limit thereof is preferably 75 parts by weight, relative to 100 parts by weight of the polyvinyl acetal. When the amount of the plasticizer is within the above range, scattering of fragments when the personal digital assistant is broken can be sufficiently suppressed.

The interlayer filling material for a touch panel of the present invention may optionally contain known additives such as an adhesion modifier, a tackifier resin, a plasticizer, an emulsifier, a softener, fine particles, a filler, a pigment, a dye, a silane coupling agent, an antioxidant, a surfactant, and a wax, within a range that the transparency is not lowered.

Preferably, the interlayer filling material for a touch panel of the present invention does not contain any organic solvent. In the case where an organic solvent is contained, an additional step of removing the organic solvent is needed after the lamination, and bleeding of the organic solvent remaining even after the removing step may occur.

The organic solvent as used herein means a liquid agent that is compatible with the polyvinyl acetal and is not reactive to irradiation with light (It is to be noted that the plasticizer is not included in the organic solvent).

The interlayer filling material for a touch panel of the present invention is preferably liquid (sol) at normal temperature at around 23°C. In such a case, the interlayer filling material for a touch panel can exhibit high followability to steps.

The lower limit of the viscosity at 25°C of the interlayer filling material for a touch panel of the present invention is preferably 20 mPa·s, and the upper limit thereof is preferably 500,000 mPa·s. When the viscosity at 25°C is less than 20 mPa·s, lamination may be difficult due to excessive flowability. When the viscosity is more than 500,000 mPa·s, the interlayer filling material for a touch panel may fail to exhibit sufficiently high followability to steps. In particular, when the viscosity at 25°C is 10,000 mPa·s or less, the interlayer filling material for a touch panel can be easily and uniformly applied using a dispenser or the like. For example, when the interlayer filling material is applied to touch panels for lamination of them, the interlayer filling material for a touch panel is uniformly spread to prevent variation in the thickness. The lower limit of the viscosity at 25°C is more preferably 1,000 mPa·s, and the upper limit thereof is more preferably 5,000 mPa·s.

The viscosity at 25°C of the interlayer filling material for a touch panel herein means the viscosity measured with a rotary viscometer (e.g., DV-II+Pro available from Brookfield) in conformity with JIS Z 8803:2011.

In the interlayer filling material for a touch panel of the present invention, the reactive diluent can react by irradiation with light to crosslink and cure. Accordingly, the interlayer filling material for a touch panel in the liquid (sol) form can exhibit high followability to steps during lamination, and the reactive diluent reacts by irradiation with light after the lamination to crosslink and cure, thereby preventing bleeding of the reactive diluent remaining in the obtained touch panel laminate.

The irradiation with light may be performed by any method. In an exemplary method, an ultraviolet light irradiation device such as an ultra-high pressure mercury lamp is used for irradiation with light.

The wavelength or illuminance of the light used in the irradiation may be appropriately determined in accordance with the types of the reactive diluent and the photopolymerization initiator or the like. For example, when the reactive diluent used is a (meth)acrylic monomer or a (meth)acrylic oligomer, and the photopolymerization initiators used are 2 parts by weight of 1-hydroxy-cyclohexyl-phenyl-ketone and 1 part by weight of 2,4,6-trimethyl benzoyl-diphenyl-phosphine oxide relative to 100 parts by weight of the resin composition, irradiation with light having a wavelength of 365 nm at a dose of 2,000 to 6,000 mJ/$cm^2$ is preferred.

The interlayer filling material for a touch panel of the present invention preferably has a storage modulus at 25°C after the irradiation with light of $9 \times 10^6$ Pa or more. In such a case, the touch panel laminate obtained has excellent

impact resistance. For achieving still higher impact resistance, the storage modulus at 25°C is more preferably $1 \times 10^7$ Pa or more.

The interlayer filling material for a touch panel of the present invention preferably has a loss modulus at 25°C after the irradiation with light of $1 \times 10^7$ Pa or less. In such a case, the touch panel obtained is less likely to suffer cracks or breakage.

The interlayer filling material for a touch panel of the present invention preferably has a flexural modulus at 23°C after the irradiation with light of 30 GPa or more. In such a case, the touch panel obtained is less likely to suffer cracks or breakage. The flexural modulus is more preferably 35 GPa or more, still more preferably 45 GPa or more, particularly preferably 55 GPa or more.

The storage modulus and loss modulus can be measured with a dynamic viscoelastometer such as ARES-G2 (TA Instruments) or DVA-200 (IT Measurement Co., Ltd.) under the condition that the temperature is lowered from 100°C to -25°C at a rate of temperature decrease of 3°C/min and at a frequency of 1 Hz and a strain of 1%. The flexural modulus is calculated from the stress value that is measured with, for example, a universal tester UTC-500 available from Orientec Co., Ltd. by compressing a glass/interlayer filling material for a touch panel/glass laminate at a compression speed of 1 mm/min to a displacement of 0.5 to 1.0 mm.

The interlayer filling material for a touch panel of the present invention may be produced by any method. An exemplary method includes mixing the polyvinyl acetal, reactive diluent, photopolymerization initiator, and optionally used additives.

The application of the interlayer filling material for a touch panel of the present invention is not particularly limited. The interlayer filling material for a touch panel of the present invention is preferably used for at least one interlayer space selected from the group consisting of an interlayer space between a touch panel and another component, an interlayer space between a surface protection panel and the touch panel, an interlayer space between the touch panel and a polarizing film, and interlayer spaces included in the touch panel between transparent conductive films, between a glass sheet and one of the transparent conductive films, between a glass sheet and another glass sheet, between a glass sheet and a polarizing film, between a substrate and a glass sheet, between a substrate and one of the transparent conductive films, and between a substrate and a polarizing film in a personal digital assistant (e.g., smartphones, tablet PCs) or a flat-type or flexible-type image display device (e.g., electronic paper, PDAs, TVs, game machines) including an image display panel such as LCD, EL, or PDP.

Fig. 1 is a cross-sectional view schematically illustrating an exemplary application of the interlayer filling material for a touch panel of the present invention. In Fig. 1, the interlayer space between a surface protection panel 3 and a touch panel 2 and the interlayer space between the touch panel 2 and a polarizing film 4 are filled with the interlayer filling material for a touch panel 1 of the present invention.

In Fig. 1, decorative printing portions 5 are formed at the periphery on the rear side of the surface protection panel 3 for the purpose of masking or the like, and the interlayer filling material for a touch panel 1 of the present invention sufficiently follows steps formed by such decorative printing portions 5 and steps (not illustrated) of the wiring formed in the touch panel 2.

The present invention also encompasses a touch panel laminate including: a touch panel; and the interlayer filling material for a touch panel of the present invention, the interlayer filling material for a touch panel filling at least one interlayer space selected from the group consisting of an interlayer space between a surface protection panel and the touch panel, an interlayer space between the touch panel and a polarizing film, and interlayer spaces included in the touch panel between transparent conductive films, between a glass sheet and one of the transparent conductive films, between a glass sheet and another glass sheet, between a glass sheet and a polarizing film, between a substrate and a glass sheet, between a substrate and one of the transparent conductive films, and between a substrate and a polarizing film.

The surface protection panel is not particularly limited, and may be one commonly used for personal digital assistants, flat-type or flexible-type image display devices, or the like, such as a glass sheet, a polycarbonate sheet, or an acrylic sheet.

The touch panel is not particularly limited, and may be one commonly used for personal digital assistants, flat-type or flexible-type image display devices, or the like, such as a touch panel including a plurality of layers (e.g., ITO film). The configuration of the touch panel is not particularly limited, and examples thereof include the out-cell type, in-cell type, on-cell type, cover glass-integrated type, and cover sheet-integrated type. The system of the touch panel is also not particularly limited, and examples thereof include the resistive film type, capacitive type, optical type, and ultrasonic type.

The polarizing film is also not particularly limited, and may be one commonly used for personal digital assistants, flat-type or flexible-type image display devices, or the like.

The method for producing a laminate by filling at least one interlayer space selected from the group consisting of an interlayer space between a surface protection panel and a touch panel, an interlayer space between the touch panel and a polarizing film, and an interlayer space between transparent conductive films included in the touch panels,

with the interlayer filling material for a touch panel of the present invention is not particularly limited, and a conventionally known method may be employed.

- Advantageous Effects of Invention

The present invention can provide an interlayer filling material for a touch panel which is used for filling an interlayer space between a touch panel and another component or an interlayer space between transparent conductive films included in the touch panel in production of a personal digital assistant, which is excellent in followability to steps, which can provide a touch panel laminate that is less likely to suffer cracks or breakage. The present invention can also provide a touch panel laminate produced using the interlayer filling material for a touch panel.

BRIEF DESCRIPTION OF DRAWINGS

Fig. 1 is a cross-sectional view schematically illustrating an exemplary application of the interlayer filling material for a touch panel of the present invention.

DESCRIPTION OF EMBODIMENTS

Embodiments of the present invention will be specifically described in the following with reference to, but not limited to, the examples.

(Example 1)

(1) Preparation of polyvinyl butyral

A reactor equipped with a stirrer was charged with 2,700 mL of ion exchange water and 300 g of polyvinyl alcohol having an average degree of polymerization of 1,600 and a degree of saponification of 99.3 mol%, and the contents were heated with stirring to be dissolved, thereby preparing a solution. To the obtained solution was added as a catalyst 35% by weight hydrochloric acid such that the hydrochloric acid concentration was set to 0.2% by weight. The temperature of the mixture was adjusted to 15°C, and 21 g of n-butyraldehyde (n-BA) was added thereto with stirring. Then, 145 g of n-butyraldehyde (n-BA) was further added, so that a polyvinyl butyral resin in the form of white particles was precipitated. Fifteen minutes after the precipitation, 35% by weight hydrochloric acid was added such that the hydrochloric acid concentration was set to 1.8% by weight. The mixture was heated to 50°C and aged at 50°C for two hours. After cooling and neutralization of the solution, the polyvinyl butyral resin was washed with water and then dried, thereby preparing polyvinyl butyral. The obtained polyvinyl butyral had a hydroxy group content of 31.0 mol%, an acetyl group content of 0.3 mol%, and a degree of butyralization of 68.7 mol%.

(2) Production of interlayer filling material for a touch panel

An amount of 100 parts by weight of the obtained polyvinyl butyral and a mixture of 120 parts by weight of butyl acrylate and 30 parts by weight of 2-hydroxy ethyl acrylate as a reactive diluent were sufficiently mixed at 60°C to give a mixture composition. The mixture composition was sufficiently mixed with photopolymerization initiators including 2,2-dimethoxy-1,2-diphenylethan-1-one (IRGACURE651 available from BASF SE) and benzoyl peroxide each in an amount of 0.5 parts by weight relative to 100 parts by weight of the reactive diluent, thereby preparing an interlayer filling material for a touch panel.

The viscosity at 25°C of the obtained interlayer filling material for a touch panel measured with a rotary viscometer (DV-II+Pro available from Brookfield) in conformity with JIS Z 8803:2011 was 7,675 mPa·s.

(Examples 2 to 4)

An interlayer filling material for a touch panel was prepared in the same manner as in Example 1, except that the type and amount of the reactive diluent was changed as specified in Table 1.

The viscosity at 25°C of the interlayer filling materials for a touch panel obtained in Examples 2 to 4 measured in the same manner as in Example 1 was 2,020, 85, and 40 mPa·s, respectively.

(Comparative Example 1)

An amount of 100 parts by weight of methyl norbornene methacrylate was sufficiently mixed with 10 parts by

weight of 4-hydroxybutyl acrylate, 10 parts by weight of hexyl acrylate, and 10 parts by weight of isophorone diisocyanate (isomer mixture) to prepare a mixture composition. To the mixture composition were added as photopolymerization initiators 1.0 part by weight of α-hydroxy alkylphenone (IRGACURE 184 available from BASF SE) and 1.0 part by weight of LUCIRIN TPO monoacylphosphine oxide (MAPO), and sufficiently mixed to prepare an interlayer filling material for a touch panel.

The viscosity at 25°C of the interlayer filling material for a touch panel measured in the same manner as in Example 1 was 1,515 mPa·s.

(Evaluation)

The interlayer filling materials for a touch panel obtained in Examples 1 to 4 and Comparative Example 1 were evaluated by the following methods.

Table 1 shows the results.

(1) Measurement of storage modulus and loss modulus of interlayer filling material for a touch panel cured by light

Each of the interlayer filling materials for a touch panel obtained in the examples and comparative examples was applied to a release-treated surface of a polyethylene terephthalate (PET) release film (thickness of 50 μm) to a thickness of 800 μm. On the obtained interlayer filling material layer, another PET release film was overlaid in such a manner that the release-treated surface was in contact with the interlayer filling material layer, thereby preparing a laminate. Then, the sheet was left to stand at 23°C for five days. Thus, an evaluation sample having PET release films attached to both surfaces was obtained (In Comparative Example 1, the interlayer filling material for a touch panel was applied to a thickness after drying of 800 μm and then dried at 80°C for 15 minutes).

The obtained evaluation sample was irradiated with light having a wavelength of 365 nm at a dose of 4,000 $mJ/cm^2$ using an ultra-high pressure mercury lamp.

The storage modulus and loss modulus at 25°C of the evaluation sample after the irradiation with light were measured with a dynamic viscoelastometer (DVA-200, available from IT Measurement Co., Ltd.) under the condition that the temperature was lowered from 200°C to - 50°C at a rate of temperature decrease of 3°C/min and at a frequency of 1 Hz and a strain of 1%.

(2) Measurement of the flexural modulus of interlayer filling material for a touch panel cured by light

The interlayer filling material for a touch panel was applied to a soda glass sheet (2.5 cm × 25.0 cm, thickness of 1.8 mm) using a dispenser to a thickness after the application of 200 μm. To the other surface of the interlayer filling material for a touch panel was attached another soda glass sheet (2.5 cm × 25.0 cm, thickness of 1.8 mm), thereby preparing a glass/interlayer filling material for a touch panel/glass structure. The structure was then irradiated with light having a wavelength of 365 nm at a dose of 4,000 $mJ/cm^2$ using an ultra-high pressure mercury lamp, thereby preparing a laminate including two glass sheets and the interlayer filling material for a touch panel filling the interlayer space between the glass sheets.

The laminate was treated in an autoclave at 75°C and 0.5 MPa for 30 minutes. The treated laminate was left to stand at 23°C and 50%R/H for 12 hours.

The modulus of elasticity of the laminate was calculated from the stress value that was measured with a universal tester UTC-500 available from Orientec Co., Ltd. by compressing the laminate at a compression speed of 1 mm/min to a displacement of 0.5 to 1.0 mm.

(3) Evaluation of followability to steps

To a white glass sheet (76 mm × 52 mm, thickness of 1.0 to 1.2 mm, S9112 available from Matsunami Glass Ind., Ltd.) was attached a frame-shaped one-sided adhesive (thickness of 75 μm) in the hollow square shape (outer frame: 76 mm × 52 mm, inner frame: 56 mm × 32 mm), thereby forming a step.

To the surface of the white glass sheet where the frame-shaped step was formed was applied the interlayer filling material for a touch panel using a dispenser to a thickness after the application of 200 μm. On the interlayer filling material for a touch panel surface was overlaid another white glass sheet (S9112 available from Matsunami Glass Ind., Ltd.). Thus, a laminated glass-like structure was prepared. The attachment was performed in such a manner that entrapment of air bubbles was avoided as far as possible. Then, the structure was irradiated with light having a wavelength of 365 nm at a dose of 4,000 $mJ/cm^2$ using an ultra-high pressure mercury lamp, thereby preparing a laminate including glass sheets and the interlayer filling material for a touch panel filling the interlayer space between the glass sheets.

The laminate was treated in an autoclave at 75°C and 0.5 MPa for 30 minutes.

The obtained laminate was observed using a digital microscope (Keyence Corporation). The case where the presence of air bubbles at the step was observed was rated "x (Poor)", while the case where the presence of air bubbles was not observed was rated "○ (Good)".

(4) Evaluation of impact resistance

To a tempered glass sheet (10 cm × 7.0 cm, thickness of 0.55 mm) was applied the interlayer filling material for a touch panel using a dispenser to a thickness after the application of 200 μm. To the other surface of the interlayer filling material for a touch panel was attached a glass sheet (10 cm × 7.0 cm, thickness of 1 mm), thereby preparing a glass/interlayer filling material for a touch panel/glass structure. Then, the structure was irradiated with light having a wavelength of 365 nm at a dose of 4,000 mJ/cm$^2$ using an ultra-high pressure mercury lamp, thereby preparing a laminate including two glass sheets and the interlayer filling material for a touch panel filling the interlayer space between the glass sheets.

The laminate was treated in an autoclave at 75°C and 0.5 MPa for 30 minutes.

An iron ball (weight of 30 g) was dropped onto the obtained laminate from the height of 155 cm in an environment of 23°C. The case where the laminate was not broken was scored 1. The case where the laminate was broken but glass fragments were not scattered and no fracture or cohesive failure was found in the interlayer filling material for a touch panel was scored 2. The case where the laminate was broken but glass fragments were not scattered and a partial fracture was found in the interlayer filling material for a touch panel was scored 3. The case where a small amount of glass fragments was scattered and a fracture or a cohesive failure was found in the interlayer filling material for a touch panel was scored 4. The case where glass fragments were scattered and a fracture or a cohesive failure was found in the interlayer filling material for a touch panel was scored 5. The scores 1 to 3 were rated "○ (Good)" and the scores 4 and 5 were rated "× (Poor)".

It is to be noted that glass powder generated from the glass itself at the part where the ball hit and glass pieces generated by breakage of the glass itself were not included in the glass fragments. The glass fragments evaluated were glass pieces generated by detachment of the glass from the interlayer filling material for a touch panel at the interface between the glass and the interlayer filling material for a touch panel and glass pieces to which the filling material adheres generated by the cohesive failure of the interlayer filling material for a touch panel.

[Table 1]

| | | | Example 1 | Example 2 | Example 3 | Example 4 | Comparative Example 1 |
|---|---|---|---|---|---|---|---|
| Formulation (Parts by weight) | Polyvinyl butyral | | 100 | 100 | 100 | 100 | Acrylic adhesive |
| | Plasticizer (3GO) | | - | - | - | - | |
| | Reactive diluent | Ethyl acrylate | - | 120 | - | 320 | |
| | | Butyl acrylate | 120 | - | 320 | - | |
| | | 2-Hydroxyethyl acrylate | 30 | 30 | 80 | 80 | |
| | Photopolymerization initiator | 2,2-dimethoxy-1,2-diphenylethan-1-one | 0.5 | 0.5 | 0.5 | 0.5 | |
| | | Benzoyl peroxide | 0.5 | 0.5 | 0.5 | 0.5 | |
| Evaluation | Modulus of elasticity after irradiation with light (25°C) (Pa) | storage modulus | 4.05E+07 | 2.64E+07 | 2.91E+07 | 1.52E+07 | 2.76E+05 |
| | | Loss modulus | 7.53E+06 | 1.51E+06 | 8.52E+06 | 1.23E+06 | 2.54E+05 |
| | Evaluation Flexural modulus (23°C) (Gpa) | | 61.0 | 58.0 | 57.6 | 60.9 | 19.4 |
| | Followability to steps | | ○ | ○ | ○ | ○ | ○ |
| | impact resistance | | ○ | ○ | ○ | ○ | × |

(Example 5)

(1) Preparation of polyvinyl butyral

A reactor equipped with a stirrer was charged with 2,700 mL of ion exchange water and 300 g of polyvinyl alcohol having an average degree of polymerization of 1,600 and a degree of saponification of 99.3 mol%, and the contents were heated with stirring to be dissolved, thereby preparing a solution. To the obtained solution was added as a catalyst 35% by weight hydrochloric acid such that the hydrochloric acid concentration was set to 0.2% by weight. The temperature of the mixture was adjusted to 15°C, and 21 g of n-butyraldehyde (n-BA) was added thereto with stirring. Then, 145 g of n-butyraldehyde (n-BA) was further added, so that a polyvinyl butyral resin in the form of white particles was precipitated. Fifteen minutes after the precipitation, 35% by weight hydrochloric acid was added such that the hydrochloric acid concentration was set to 1.8% by weight. The mixture was heated to 50°C and aged at 50°C for two hours. After cooling and neutralization of the solution, the polyvinyl butyral resin was washed with water and then dried, thereby preparing polyvinyl butyral. The obtained polyvinyl butyral had a hydroxy group content of 31.0 mol%, an acetyl group content of 0.3 mol%, and a degree of butyralization of 68.7 mol%.

(2) Production of interlayer filling material for a touch panel

As shown in Table 2, a mixture composition was obtained by sufficiently mixing at 60°C 40% by weight of the obtained polyvinyl butyral, 15% by weight of methoxypolyethylene glycol #400 acrylate (monofunctional, molecular weight of 454, AM-90G available from Shin-Nakamura Chemical Co., Ltd.) as a (meth)acrylate having a glycol skeleton, 20% by weight of 4-hydroxybutyl (meth)acrylate glycidyl ether (4HBAGE, molecular weight of 200), and 15% by weight of glycidyl methacrylate (molecular weight of 142), and 10% by weight of an acid-modified acrylate oligomer (CN147 available from Sartomer, molecular weight of 348) as (meth)acrylates other than the (meth)acrylate having a glycol skeleton.

An amount of 100 parts by weight of the obtained mixture composition was sufficiently mixed with 2 parts by weight of 1-hydroxy-cyclohexyl-phenyl-ketone (IRGACURE184 available from BASF SE), 1 part by weight of 2,4,6-trimethyl benzoyl-diphenyl-phosphine oxide (LUCIRIN TPO available from BASF SE), and 0.5 parts by weight of benzoyl peroxide as photopolymerization initiators, thereby preparing an interlayer filling material for a touch panel.

The amount of double bonds in all the compounds, excluding the photopolymerization initiator, contained in the obtained interlayer filling material for a touch panel was 2.67 mmol/g.

Other components specified in Tables 2 and 3 are listed below.

<(Meth)acrylate having a glycol skeleton>

APG-700: available from Shin-Nakamura Chemical Co., Ltd., polypropylene glycol (#700) diacrylate, bifunctional, molecular weight of 808

ATM-35E: available from Shin-Nakamura Chemical Co., Ltd., ethoxylated pentaerythritol tetraacrylate, tetrafunctional, molecular weight of 1,892

<Non-reactive component>

KE-604: available form Arakawa Chemical Industries, Ltd., acid-modified colorless rosin

(Examples 6 to 15, Comparative Examples 2 to 12)

An interlayer filling material for a touch panel was prepared in the same manner as in Example 5, except that the formulation was changed as specified in Table 2 or 3.

(Evaluation)

The interlayer filling materials for a touch panel obtained in Examples 5 to 15 and Comparative Examples 2 to 12 were evaluated by the following methods.

Tables 2 and 3 show the results.

(1) Evaluation of followability to steps

To a white glass sheet (76 mm × 52 mm, thickness of 1.0 to 1.2 mm, S9112 available from Matsunami Glass Ind., Ltd.) was attached a frame-shaped one-sided adhesive (thickness of 75 μm) in the hollow square shape (outer frame:76 mm × 52 mm, inner frame: 56 mm × 32 mm), thereby forming a step.
To the surface of the white glass sheet where the frame-shaped step was formed was applied the interlayer filling material for a touch panel using a dispenser to a thickness after the application of 200 μm. On the interlayer filling material for a touch panel surface was overlaid another white glass sheet (S9112 available from Matsunami Glass Ind., Ltd.). Thus, a laminated glass-like structure was prepared. The attachment was performed in such a manner that entrapment of air bubbles was avoided as far as possible. Then, the structure was irradiated with light having a wavelength of 365 nm at a dose of 4,000 mJ/cm$^2$ using an ultra-high pressure mercury lamp, thereby preparing a laminate including glass sheets and the interlayer filling material for a touch panel filling the interlayer space between the glass sheets.
The laminate was treated in an autoclave at 55°C and 0.5 MPa for 30 minutes.
The obtained laminate was observed using a digital microscope (Keyence Corporation). The case where the presence of air bubbles at the step was observed was rated "x (Poor)", while the case where the presence of air bubbles was not observed was rated "○ (Good)".

(2) Evaluation of impact resistance

To a tempered glass sheet (10 cm × 7.0 cm, thickness of 0.55 mm) was applied the interlayer filling material for a touch panel using a dispenser to a thickness after the application of 100 μm. To the other surface of the interlayer filling material for a touch panel was attached a glass sheet (10 cm × 7.0 cm, thickness of 1 mm), thereby preparing a glass/interlayer filling material for a touch panel/glass structure. Then, the structure was irradiated with light having a wavelength of 365 nm at a dose of 4,000 mJ/cm$^2$ using an ultra-high pressure mercury lamp, thereby preparing a laminate including two glass sheets and the interlayer filling material for a touch panel filling the interlayer space between the glass sheets.
The laminate was treated in an autoclave at 55°C and 0.5 MPa for 30 minutes.
An iron ball (weight of 30 g) was dropped onto the obtained laminate from the height of 155 cm in an environment of 23°C. The case where the laminate was not broken was scored 1. The case where the laminate was broken but glass fragments were not scattered and no fracture or cohesive failure was found in the interlayer filling material for a touch panel was scored 2. The case where the laminate was broken but glass fragments were not scattered and a partial fracture was found in the interlayer filling material for a touch panel was scored 3. The case where a small amount of glass fragments was scattered and a fracture or a cohesive failure was found in the interlayer filling material for a touch panel was scored 4. The case where glass fragments were scattered and a fracture or a cohesive failure was found in the interlayer filling material for a touch panel was scored 5. The scores 1 to 3 were rated "○ (Good)" and the scores 4 and 5 were rated "x (Poor)".
It is to be noted that glass powder generated from the glass itself at the part where the ball hit and glass pieces generated by breakage of the glass itself were not included in the glass fragments. The glass fragments to be evaluated were glass pieces generated by detachment of the glass from the interlayer filling material for a touch panel at the interface between the glass and the interlayer filling material for a touch panel and glass pieces to which the filling material adheres generated by the cohesive failure of the interlayer filling material for a touch panel.

(3) Measurement of cure shrinkage

A 1-cm cell was filled with the interlayer filling material for a touch panel, and the solution density (dl) was measured using a high-precision dry automatic densimeter (Accupyc II 1340-1CC available from Micromeritics Instrument Corp.) by the constant volume expansion method.
Separately, the interlayer filling material for a touch panel was applied to a polyethylene terephthalate (PET) sheet via a spacer to the thickness of 600 μm, and irradiated with light having a wavelength of 365 nm at a dose of 4,000 mJ/cm$^2$ using an ultra-high pressure mercury lamp. Thus obtained resin film was cut into a size of 30-mm square. The resin film density (df) of the peeled resin film was measured using a high-precision electron specific gravity meter (SD-200L available from Alfa Mirage) in conformity with JIS K7112 by the water displacement method.
The cure shrinkage was calculated by the following equation based on the solution density (dl) and resin film density (df).

$$\text{Cure shrinkage (\%)} = (df - dl)/df \times 100$$

(4) Evaluation of liquid crystal display unevenness

To a tempered glass sheet (10 cm × 7.0 cm, thickness of 0.55 mm) was applied the interlayer filling material for a touch panel using a dispenser to a thickness after the application of 200 μm. To the other surface of the interlayer filling material for a touch panel was attached a liquid crystal panel (10 cm × 7.0 cm), thereby preparing a glass/interlayer filling material for a touch panel/liquid crystal panel structure. Then, the structure was irradiated with light having a wavelength of 365 nm at a dose of 4,000 mJ/$cm^2$ using an ultra-high pressure mercury lamp, thereby preparing a laminate including two glass sheets and the interlayer filling material for a touch panel filling the interlayer space between the glass sheets. The laminate was treated in an autoclave at 55°C for 0.5 MPa for 30 minutes.
On the surface of the obtained laminate was projected a fluorescent lamp on the ceiling, and the interference pattern was visually observed to check the occurrence of liquid crystal display unevenness. The case where display unevenness was not at all observed was rated "○○ (Excellent)". The case where display unevenness was hardly observed was rated "○ (Good)". The case where slight display unevenness was observed but display of images was not disturbed to be practically allowable was rated "Δ (Average)". The case where display unevenness was strong and the display was not practically allowable was rated "× (Poor)".

(5) Measurement of haze value

To a glass sheet (10 cm × 7.0 cm, thickness of 1 mm) was applied the interlayer filling material for a touch panel using a dispenser to a thickness after the application of 100 μm. To the other surface of the interlayer filling material for a touch panel was attached another glass sheet (10 cm × 7.0 cm, thickness of 1 mm), thereby preparing a glass/interlayer filling material for a touch panel/glass structure (glass-glass structure).
A glass/interlayer filling material for a touch panel/ITO-PET structure (glass-ITO structure) was also produced by a similar method except that the glass on one side of the laminate was changed to an ITO polyethylene terephthalate (PET) film (Sekisui Chemical Co., Ltd.).
The haze value of each of the obtained structures was measured with a color haze meter (Murakami Color Research Laboratory) in conformity with JIS K 5600, and taken as the initial haze value.
The structures were each allowed to stand still in a thermohygrostat at a temperature of 85°C and a humidity of 85% for 240 hours. Then, the haze value of each structure was similarly measured, and taken as the haze value after moisture and heat resistance test.
Each haze value is a numerical value including the haze values of glass and ITO-PET as the substrate materials.

[Table 2]

| | | | | Example 5 | Example 6 | Example 7 | Example 8 | Example 9 | Example 10 | Example 11 | Example 12 | Example 13 | Example 14 | Example 15 |
|---|---|---|---|---|---|---|---|---|---|---|---|---|---|---|
| Formulation (parts by weight) | Polyvinyl butyral | | | 40 | 30 | 30 | 30 | 30 | 20 | 20 | 20 | 15 | 15 | 15 |
| | Reactive diluent having reactive double bond | (meth) acrylate having glycol skeleton | AM-90G (monofunctional) | 15 | 8 | 15 | 25 | 38 | 20 | 20 | 15 | 21 | 17 | 18 |
| | | | APG-700 (bifunctional) | - | - | - | - | - | - | 5 | 10 | 10 | 17 | - |
| | | | ATM-35E (tetrafunctional) | - | - | - | - | - | - | - | 5 | 5 | 3 | - |
| | | Other (meth) acrylates | 4HBAGE | 20 | 22 | 15 | 10 | 5 | 17 | 17 | 17 | 17 | 17 | 17 |
| | | | Glycidyl methacrylate | 15 | 15 | 15 | 15 | 15 | 13 | 13 | 13 | 14 | 15 | 14 |
| | | | CN147 | 10 | 15 | 15 | 10 | 2 | 20 | 15 | 10 | 3 | - | 20 |
| | Non-reactive component (KE604) | | | - | 10 | 10 | 10 | 10 | 10 | 10 | 10 | 15 | 16 | 16 |
| Amount of (meth)acrylate having glycol skeleton (% by weight) | | | | 15 | 8 | 15 | 25 | 38 | 20 | 25 | 30 | 36 | 37 | 18 |
| Amount of double bonds (mmol/g) | | | | 2.67 | 2.76 | 2.57 | 2.39 | 2.20 | 2.78 | 2.76 | 2.74 | 2.68 | 2.76 | 2.81 |
| Evaluation | Followability to steps | | | ○ | ○ | ○ | ○ | ○ | ○ | ○ | ○ | ○ | ○ | ○ |
| | Impact resistance | | | ○ | ○ | ○ | ○ | ○ | ○ | ○ | ○ | ○ | ○ | ○ |
| | Cure shrinkage (%) | | | 3.85 | 3.99 | 3.88 | 3.49 | 2.44 | 3.27 | 3.58 | 3.98 | 1.64 | 1.86 | 3.99 |
| | Liquid crystal display unevenness | | | ○ | ○ | ○ | ○ | ○○ | ○ | ○ | ○ | ○○ | ○○ | ○ |
| | Haze value (%) | Glass-glass structure | Initial | 0.4 | 0.3 | 0.4 | 0.5 | 0.7 | 0.6 | 0.4 | 0.3 | 0.1 | 0.1 | 0.2 |
| | | | After moisture and heat resistance test | 0.8 | 0.9 | 0.9 | 0.8 | 0.7 | 0.9 | 0.4 | 0.3 | 0.6 | 0.6 | 0.4 |
| | | Glass-ITO structure | Initial | 0.4 | 0.3 | 0.4 | 0.6 | 0.8 | 0.5 | 0.4 | 0.3 | 0.1 | 0.2 | 0.2 |
| | | | After moisture and heat resistance test | 0.9 | 1.0 | 1.0 | 0.9 | 1.0 | 0.9 | 0.9 | 0.7 | 0.8 | 0.8 | 0.4 |

[Table 3]

| | | | | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 | Comparative Example 11 | Comparative Example 12 |
|---|---|---|---|---|---|---|---|---|---|---|---|---|---|---|
| Formulation (parts by weight) | Polyvinyl butyral | | | 30 | 30 | 30 | 20 | 15 | 15 | 0 | 0 | 20 | 20 | 20 |
| | Reactive diluent having reactive double bond | (meth) acrylate having glycol skeleton | AM-90G (monofunctional) | 45 | 40 | 40 | 21 | 22 | 21 | 5 | 25 | 5 | 40 | - |
| | | | APG-700 (bifunctional) | - | - | - | 13 | 18 | 18 | - | - | - | 25 | - |
| | | | ATM-35E (tetrafunctional) | - | - | - | 5 | - | - | - | - | - | 5 | - |
| | | Other (meth) acrylates | 4HBAGE | - | - | 5 | 17 | 17 | 18 | 30 | 30 | 30 | - | 30 |
| | | | Glycidyl methacrylate | 15 | 15 | 15 | 14 | 13 | 14 | 15 | 15 | 15 | - | 30 |
| | | | CN147 | - | 5 | - | - | - | - | - | - | - | - | 10 |
| | Non-reactive component (KE604) | | | 10 | 10 | 10 | 10 | 15 | 15 | 50 | 30 | 30 | 10 | 10 |
| Amount of (meth)acrylate having glycol skeleton (% by weight) | | | | 45 | 40 | 40 | 39 | 40 | 39 | 5 | 25 | 5 | 70 | 0 |
| Amount of double bonds (mmol/g) | | | | 2.05 | 2.08 | 2.19 | 2.72 | 2.69 | 2.76 | 2.67 | 3.11 | 2.67 | 1.61 | 3.90 |
| Evaluation | Followability to steps | | | ○ | ○ | ○ | ○ | ○ | ○ | ○ | ○ | ○ | ○ | ○ |
| | Impact resistance | | | ○ | ○ | ○ | ○ | ○ | ○ | × | × | ○ | ○ | ○ |
| | Cure shrinkage (%) | | | 3.43 | 3.38 | 2.44 | 3.83 | 3.85 | 3.78 | 2.96 | 4.20 | 3.28 | 1.67 | 5.14 |
| | Liquid crystal display unevenness | | | ○ | ○ | ○ | ○ | ○ | ○ | ○ | × | ○ | ○ | × |
| | Haze value (%) | Glass-glass structure | Initial | 0.8 | 1.4 | 1.2 | 0.2 | 0.3 | 0.3 | 1 | 0.1 | 0.6 | 1.8 | 0.3 |
| | | | After moisture and heat resistance test | 5.8 | 1.8 | 1.6 | 2.1 | 1.6 | 5.3 | 4.7 | 1.6 | 1.8 | 2.1 | 2.9 |
| | | Glass-ITO structure | Initial | 0.8 | 1.6 | 1.5 | 0.2 | 0.6 | 0.3 | 1.2 | 0.1 | 0.9 | 1.8 | 0.2 |
| | | | After moisture and heat resistance test | 7.8 | 2.3 | 2.1 | 2.3 | 2.6 | 6.3 | 5.4 | 3.9 | 2.5 | 2.3 | 3.5 |

(Example 16)

(1) Preparation of polyvinyl butyral

A reactor equipped with a stirrer was charged with 2,700 mL of ion exchange water and 300 g of polyvinyl alcohol having an average degree of polymerization of 1,600 and a degree of saponification of 99.3 mol%, and the contents were heated with stirring to be dissolved, thereby preparing a solution. To the obtained solution was added as a catalyst 35% by weight hydrochloric acid such that the hydrochloric acid concentration was set to 0.2% by weight. The temperature of the mixture was adjusted to 15°C, and 21 g of n-butyraldehyde (n-BA) was added thereto with stirring. Then, 145 g of n-butyraldehyde (n-BA) was further added, so that a polyvinyl butyral resin in the form of white particles was precipitated. Fifteen minutes after the precipitation, 35% by weight hydrochloric acid was added such that the hydrochloric acid concentration was set to 1.8% by weight. The mixture was heated to 50°C and aged at 50°C for two hours. After cooling and neutralization of the solution, the polyvinyl butyral resin was washed with water and then dried, thereby preparing polyvinyl butyral. The obtained polyvinyl butyral had a hydroxy group content of 31.0 mol%, an acetyl group content of 0.3 mol%, and a degree of butyralization of 68.7 mol%.

(2) Production of interlayer filling material for a touch panel

As shown in Table 4, a mixture composition was prepared by sufficiently mixing at 60°C 15% by weight of the obtained polyvinyl butyral, 5% by weight of a phosphate ester (meth)acrylate (monofunctional methacrylic acid ester, SR9050 available from Sartomer), 15% by weight of an acid-modified colorless rosin (KE-604 available from Arakawa Chemical Industries, Ltd.) as a non-reactive component, and 20% by weight of glycidyl methacrylate (GMA), 15% by weight of 4-hydroxybutyl (meth)acrylate glycidyl ether (4HBAGE), 21% by weight of methoxypolyethylene glycol #400 acrylate (AM-90G available from Shin-Nakamura Chemical Co., Ltd.), and 9% by weight of polypropylene glycol (#700) diacrylate (APG-700 available from Shin-Nakamura Chemical Co., Ltd.) as (meth)acrylates other than the phosphate ester (meth)acrylate.

An amount of 100 parts by weight of the obtained mixture composition was sufficiently mixed with 2 parts by weight of 1-hydroxy-cyclohexyl-phenyl-ketone (IRGACURE184 available from BASF SE), 1 part by weight of 2,4,6-trimethyl benzoyl-diphenyl-phosphine oxide (LUCIRIN TPO available from BASF SE), and 0.5 parts by weight of benzoyl peroxide as photopolymerization initiators, thereby preparing an interlayer filling material for a touch panel.

The viscosity at 25°C of the obtained interlayer filling material for a touch panel was measured with a rotary viscometer (DV-II+Pro available from Brookfield) in conformity with JISS Z 8803:2011, and was 2,650 mPa·s.

(3) Measurement of modulus of elasticity of interlayer filling material for a touch panel cured by light

The obtained interlayer filling material for a touch panel was applied to a release-treated surface of a polyethylene terephthalate (PET) release film (thickness of 50 μm) to a thickness of 800 μm. On the obtained interlayer filling material layer, another PET release film was overlaid in such a manner that the release-treated surface was in contact with the interlayer filling material layer, thereby preparing a laminate. The obtained laminate was irradiated with light having a wavelength of 365 nm at a dose of 4,000 mJ/$cm^2$ using an ultra-high pressure mercury lamp. Then, the sheet was left to stand at 23°C for five days. Thus, an evaluation sample having PET release films attached to both surfaces was obtained.

The storage modulus and tanδ at 25°C of the obtained evaluation sample was measured using a dynamic viscoelastometer (DVA-200 available from IT Measurement Co., Ltd.) under the condition that the temperature was lowered from 200°C to -50°C at a rate of temperature decrease of 3°C/min and at a frequency of 1 Hz and a strain of 1%.

(Examples 17 to 26, Comparative Examples 13 to 19)

The interlayer filling material for a touch panel was produced in the same manner as in Example 16, except that the formulation was changed as specified in Table 4 or 5.

Other components specified in Tables 4 and 5 are listed below.

<Phosphate ester (meth)acrylate>

SR9051: trifunctional methacrylic acid ester available from Sartomer

SR9053: trifunctional acrylic acid ester available from Sartomer

<Other (meth)acrylates>

CN147: acid-modified acrylate oligomer available from Sartomer

M-5300: ω-carboxy-polycaprolactone monoacrylate available from Toagosei Co., Ltd.

<Non-reactive component>

3GO: triethylene glycol-di-2-ethylhexanoate

(Evaluation)

The interlayer filling materials for a touch panel obtained in Examples 16 to 26 and Comparative Examples 13 to 19 were evaluated by the following methods.

Tables 4 and 5 show the results.

(1) Evaluation of impact resistance

To a tempered glass sheet (10 cm × 7.0 cm, thickness of 0.55 mm) was applied the interlayer filling material for a touch panel using a dispenser to a thickness after the application of 100 μm. To the other surface of the interlayer filling material for a touch panel was attached a glass sheet (10 cm × 7.0 cm, thickness of 1 mm), thereby preparing a glass/interlayer filling material for a touch panel/glass structure (glass-glass structure). A glass/interlayer filling material for a touch panel/ polycarbonate (PC) sheet structure (glass-PC structure) was also produced by a similar method except that the glass on one side of the laminate was changed to a PC sheet (thickness of 3 mm, Takirion Co., Ltd.). Then, the structure was irradiated with light having a wavelength of 365 nm at a dose of 4,000 mJ/$cm^2$ using an ultra-high pressure mercury lamp, thereby preparing a laminate including two glass sheets and the interlayer filling material for a touch panel filling the interlayer space between the glass sheets.

The laminate was treated in an autoclave at 55°C and 0.5 MPa for 30 minutes.

An iron ball (weight of 30 g) was dropped onto the obtained glass-glass structure from the height of 170 cm in an environment of 23°C. The case where the laminate was not broken was scored "1". The case where the laminate was broken but glass fragments were not scattered and no fracture or cohesive failure was found in the interlayer filling material for a touch panel was scored "2". The case where a small amount of glass fragments was scattered and a fracture or a cohesive failure was found in the interlayer filling material for a touch panel was scored "3". The case where glass fragments were scattered and a fracture or a cohesive failure was found in the interlayer filling material for a touch panel was scored "4". The scores 1 and 2 were rated "o (Good)" and the scores 3 and 4 were rated "× (Poor)".

Iron balls (weight of 30 g, 60 g, and 130 g) were dropped onto the obtained glass-PC structure from the height of 370 cm successively, and the case where the laminate was not broken was scored "1". Iron balls (weight of 30 g, 60 g, and 130 g) were dropped onto the obtained glass-PC structure from the height of 350 cm successively, and the case where the laminate was not broken was scored "2". An iron ball (weight of 60 g) was dropped from the height of 370 cm or an iron ball (weight of 130 g) was dropped from the height of 350 cm, onto the glass-PC structure. The case where a small amount of glass fragments was scattered and a fracture or a cohesive failure was found in the interlayer filling material for a touch panel was scored "3", and the case where glass fragments were scattered and a fracture or a cohesive failure was found in the interlayer filling material for a touch panel was scored "4". The score 1 was rated "oo (Excellent)". The score 2 was rated "o (Good)". The scores 3 and 4 were rated "× (Poor)".

Those rated "o (Good)" in the evaluation of the glass-glass structure and "oo (Excellent)" in the evaluation of the glass-PC structure were comprehensively rated "oo (Excellent)". Those rated "o (Good)" in the evaluation of the glass-glass structure and "o (Good)" in the evaluation of the glass-PC structure were comprehensively rated "o (Good)". Those rated "× (Poor)" in the evaluation of either the glass-glass structure or the glass-PC structure was comprehensively rated "Δ (Average)". Those rated "× (Poor)" in the evaluation of the glass-glass structure and "x (Poor) in the evaluation of the glass-PC structure were comprehensively rated "× (Poor)".

It is to be noted that glass powder generated from the glass itself at the part where the ball hit and glass pieces generated by breakage of the glass itself were not included in the glass fragments. The glass fragments evaluated were glass pieces generated by detachment of the glass from the interlayer filling material for a touch panel at the interface between the glass and the interlayer filling material for a touch panel and glass pieces to which the filling material adheres

generated by the cohesive failure of the interlayer filling material for a touch panel.

(2) Measurement of yellow index (YI) value

To a glass sheet (10 cm × 7.0 cm, thickness of 1 mm) was applied the interlayer filling material for a touch panel using a dispenser to the thickness after the application of 100 μm. To the other surface of the interlayer filling material for a touch panel was attached another glass sheet (10 cm × 7.0 cm, thickness of 1 mm), thereby preparing a glass/interlayer filling material for a touch panel/glass structure.

The yellow index value in the wavelength range of 380 to 780 nm of the obtained structure was measured with a spectrophotometer (U-4000 available from Shimadzu Corporation) in conformity with JIS Z 8722 and JIS R 3106.

[Table 4]

| | | | Example 16 | Example 17 | Example 18 | Example 19 | Example 20 | Example 21 | Example 22 | Example 23 | Example 24 | Example 25 | Example 26 |
|---|---|---|---|---|---|---|---|---|---|---|---|---|---|
| Formulation (parts by weight) | Polyvinyl butyral | | 15 | 15 | 15 | 20 | 15 | 15 | 15 | 15 | 15 | 15 | 15 |
| | Non-reactive component | KE604 | 15 | 10 | 25 | 15 | 15 | 15 | 15 | 15 | 15 | 15 | 15 |
| | | 3GO | 0 | 5 | 0 | 0 | 0 | 0 | 0 | 0 | 0 | 0 | 2 |
| | Reactive diluent having reactive double bond: Phosphate ester (meth) acrylate | SR9050 | 5 | 5 | 7 | 10 | 0 | 0 | 0 | 0 | 0 | 0 | 0 |
| | | SR9051 | 0 | 0 | 0 | 0 | 5 | 7 | 0 | 0 | 0 | 0 | 0 |
| | | SR9053 | 0 | 0 | 0 | 0 | 0 | 0 | 5 | 3 | 5 | 7 | 6.8 |
| | Reactive diluent having reactive double bond: Other (meth) acrylates | GMA | 20 | 5 | 20 | 15 | 20 | 15 | 20 | 14 | 14 | 14 | 13.6 |
| | | 4HBAGE | 15 | 18 | 13 | 15 | 15 | 15 | 15 | 17 | 17 | 17 | 17 |
| | | AM-90G | 21 | 27 | 20 | 15 | 21 | 20 | 21 | 21 | 21 | 21 | 20.4 |
| | | APG-700 | 9 | 15 | 0 | 10 | 9 | 10 | 9 | 15 | 13 | 11 | 10.2 |
| | | CN147 | 0 | 0 | 0 | 0 | 0 | 0 | 0 | 0 | 0 | 0 | 0 |
| | | M-5300 | 0 | 0 | 0 | 0 | 0 | 3 | 0 | 0 | 0 | 0 | 0 |
| Storage modulus [25°C] | | | 2.03.E+07 | 9.62.E+06 | 2.55.E+07 | 3.46.E+07 | 1.36.E+07 | 2.02.E+07 | 1.66.E+07 | 2.36.E+07 | 1.89.E+07 | 1.98.E+07 | 1.38.E+07 |
| tan δ [25°C] | | | 2.93.E-01 | 3.06.E-01 | 4.67.E-01 | 3.32.E-01 | 3.14.E-01 | 3.03.E-01 | 2.93.E-01 | 2.18.E-01 | 2.28.E-01 | 2.40.E-01 | 2.35.E-01 |
| Viscosity [mPa· s (25°C)] | | | 2650 | 2590 | 9720 | 7710 | 2890 | 6600 | 4880 | 5750 | 5880 | 5640 | 5280 |
| Evaluation | Yellow index (YI) | | 0.83 | 0.89 | 0.87 | 0.84 | 0.79 | 0.79 | 0.78 | 0.99 | 0.99 | 0.88 | 0.77 |
| | Impact resistance test (Comprehensive evaluation) | | oo | oo | oo | o | oo | o | oo | o | oo | oo | oo |

[Table 5]

| | | | | Comparative Example 13 | Comparative Example 14 | Comparative Example 15 | Comparative Example 16 | Comparative Example 17 | Comparative Example 18 | Comparative Example 19 |
|---|---|---|---|---|---|---|---|---|---|---|
| Formulation (parts by weight) | Polyvinyl butyral | | | 15 | 15 | 0 | 0 | 0 | 0 | 15 |
| | Non-reactive component | | KE604 | 10 | 15 | 0 | 30 | 0 | 30 | 15 |
| | | | 3GO | 0 | 0 | 0 | 0 | 0 | 0 | 0 |
| | Reactive diluent having reactive double bond | Phosphate ester (meth)acrylate | SR9050 | 0 | 0 | 0 | 0 | 0 | 0 | 0 |
| | | | SR9051 | 0 | 0 | 0 | 0 | 0 | 0 | 0 |
| | | | SR9053 | 0 | 1 | 10 | 7 | 0 | 0 | 0 |
| | | Other (meth)acrylates | GMA | 0 | 14 | 20 | 14 | 20 | 14 | 14 |
| | | | 4HBAGE | 30 | 17 | 25 | 17 | 25 | 17 | 17 |
| | | | AM-90G | 30 | 21 | 30 | 21 | 30 | 21 | 21 |
| | | | APG-700 | 15 | 17 | 15 | 11 | 15 | 11 | 11 |
| | | | CN147 | 0 | 0 | 0 | 0 | 10 | 7 | 7 |
| | | | M-5300 | 0 | 0 | 0 | 0 | 0 | 0 | 0 |
| Storage modulus [25°C] | | | | 8.60.E+07 | 8.97.E+07 | 1.51.E+07 | 8.90.E+06 | 2.23.E+06 | 1.41.E+06 | 1.76.E+08 |
| tan δ [25°C] | | | | 1.35.E-01 | 1.57.E-01 | 1.27.E-02 | 8.74.E-02 | 7.49.E-03 | 1.25.E-01 | 1.25.E-01 |
| Viscosity [mPa·s (25°C)] | | | | 2250 | 3570 | 20 | 190 | 10 | 110 | 2740 |
| Evaluation | Yellow index (YI) | | | 1.98 | 1.24 | 1.30 | 0.80 | 1.16 | 0.99 | 1.22 |
| | Impact resistance test (Comprehensive evaluation) | | | Δ | Δ | × | Δ | × | × | Δ |

INDUSTRIAL APPLICABILITY

The present invention can provide an interlayer filling material for a touch panel which is used for filling an interlayer space between a touch panel and another component or an interlayer space between transparent conductive films included in the touch panel in production of a personal digital assistant, which is excellent in followability to steps, which can provide a touch panel laminate that is less likely to suffer cracks or breakage. The present invention can also provide a touch panel laminate produced using the interlayer filling material for a touch panel.

REFERENCE SIGNS LIST

1: The interlayer filling material for a touch panel of the present invention
2: Touch panel
3: Surface protection panel
4: Polarizing film
5: Decorative printing portion

## Claims

1. An interlayer filling material for a touch panel used for filling an interlayer space between a touch panel and another component, or at least one of interlayer spaces included in the touch panel between transparent conductive films, between a glass sheet and one of the transparent conductive films, between a glass sheet and another glass sheet, between a glass sheet and a polarizing film, between a substrate and a glass sheet, between a substrate and one of the transparent conductive films, and between a substrate and a polarizing film,
the interlayer filling material comprising:

    a polyvinyl acetal;
    a reactive diluent; and
    a photopolymerization initiator.

2. The interlayer filling material for a touch panel according to claim 1,
wherein the reactive diluent is a reactive diluent having a reactive double bond.

3. The interlayer filling material for a touch panel according to claim 2,
wherein the reactive diluent having a reactive double bond is a (meth)acrylic monomer or a (meth)acrylic oligomer.

4. The interlayer filling material for a touch panel according to claim 2,
wherein the reactive diluent having a reactive double bond contains a (meth)acrylate having a glycol skeleton, and the amount of the (meth)acrylate having a glycol skeleton in the interlayer filling material for a touch panel is 8 to 38% by weight.

5. The interlayer filling material for a touch panel according to claim 2,
wherein the reactive diluent having a reactive double bond contains a phosphate ester (meth)acrylate, and the amount of the phosphate ester (meth)acrylate in the interlayer filling material for a touch panel is 2 to 10% by weight.

6. The interlayer filling material for a touch panel according to claim 1, 2, 3, 4, or 5,
wherein the amount of double bonds in all compounds excluding the photopolymerization initiator is 2.9 mmol/g or less.

7. The interlayer filling material for a touch panel according to claim 1, 2, 3, 4, 5, or 6, further containing a non-reactive component.

8. The interlayer filling material for a touch panel according to claim 1, 2, 3, 4, 5, 6, or 7, having a storage modulus at 25°C after irradiation with light of $9 \times 10^6$ Pa or higher.

9. The interlayer filling material for a touch panel according to claim 1, 2, 3, 4, 5, 6, 7, or 8, having a loss modulus at

25°C after irradiation with light of $1 \times 10^7$ Pa or lower.

**10.** The interlayer filling material for a touch panel according to claim 1, 2, 3, 4, 5, 6, 7, 8, or 9, having a flexural modulus at 23°C after irradiation with light of 30 GPa or higher.

**11.** A touch panel laminate comprising:

a touch panel; and
the interlayer filling material for a touch panel according to claim 1, 2, 3, 4, 5, 6, 7, 8, 9, or 10,
the interlayer filling material for a touch panel filling at least one interlayer space selected from the group consisting of an interlayer space between a surface protection panel and the touch panel, an interlayer space between the touch panel and a polarizing film, and interlayer spaces included in the touch panel between transparent conductive films, between a glass sheet and one of the transparent conductive films, between a glass sheet and another glass sheet, between a glass sheet and a polarizing film, between a substrate and a glass sheet, between a substrate and one of the transparent conductive film, and between a substrate and a polarizing film.

FIG.1

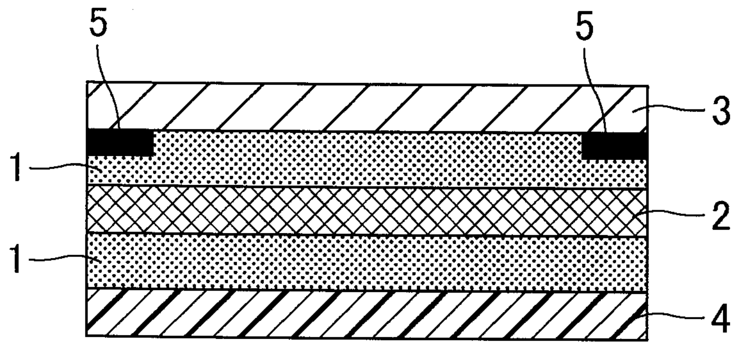

**INTERNATIONAL SEARCH REPORT**

International application No.
PCT/JP2016/064304

A. CLASSIFICATION OF SUBJECT MATTER
*G06F3/041*(2006.01)i, *B32B27/30*(2006.01)i, *C09J4/02*(2006.01)i, *C09J11/06*(2006.01)i, *C09J129/14*(2006.01)i

According to International Patent Classification (IPC) or to both national classification and IPC

B. FIELDS SEARCHED

Minimum documentation searched (classification system followed by classification symbols)
G06F3/041, B32B27/30, C09J4/02, C09J11/06, C09J129/14

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2016 |
| Kokai Jitsuyo Shinan Koho | 1971-2016 | Toroku Jitsuyo Shinan Koho | 1994-2016 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2013-77198 A (Tomoegawa Paper Co., Ltd.), 25 April 2013 (25.04.2013), paragraphs [0025] to [0046] (Family: none) | 1-11 |
| A | JP 2015-91934 A (Sekisui Chemical Co., Ltd.), 14 May 2015 (14.05.2015), paragraphs [0008] to [0060] (Family: none) | 1-11 |
| A | JP 2004-339370 A (Kyoto Elex Co., Ltd.), 02 December 2004 (02.12.2004), paragraphs [0009] to [0042] (Family: none) | 1-11 |

☐ Further documents are listed in the continuation of Box C.   ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 20 July 2016 (20.07.16) | 02 August 2016 (02.08.16) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2011074308 A